# EUROPEAN PATENT APPLICATION

(11) **EP 2 515 075 A1**
(43) Date of publication of application: **24.10.2012**
(21) Application number: 11163043.0
(22) Date of filing: 19.04.2011
(51) Int. Cl.: G01C 5/06, H04W 52/02, H04W 72/12, H04W 4/02

(54) **Weather prediction for pressure sensor**

(71) Applicant: Sony Ericsson Mobile Communications AB, 221 88 Lund (SE)
(72) Inventor: Persson, Magnus, 247 47, Flyinge (SE)
(74) Representative: Andersson, Per Rune

(57) **Abstract**

The invention relates to a method and an apparatus for updating application information of an application in a portable communication device. The updating involves determining the current location and the connectivity to a communication network, adaptively creating a visitation history based on the current position and previously visited locations of the portable communication device, and also on the connectivity to a communication network of the current and previously visited locations. Then the next visitation location is predicted based on the visitation history, and if the next location is determined to not have any connectivity, up-to-date application information is downloaded from a server for updating the application information in the portable communication device.

## Description

### TECHNICAL FIELD

The present invention relates to the field of portable electronic devices and, in particularly, to such devices having an air pressure sensor for determining the altitude of the portable electronic device, and for updating of information relating to the altitude determination. The present invention especially targets the area of portable mobile communication devices, such as mobile phones, where accurate altitude measurements using an altimeter application is highly sought for.

### BACKGROUND

Modern day portable communication devices are often fitted with several different types of sensors. The recorded data from these sensors may then utilized by applications, running in the portable communication device, to aid the user in his or hers everyday life. An example of such a sensor is the pressure sensor which is capable of recording the surrounding air pressure with a high degree of accuracy. The recorded air pressure data can then, for example, be used in an altimeter application for determining the current altitude of the portable communication device. However, to be able to get an accurate estimate of the current altitude, the air pressure at sea level for the current position of the mobile communication device must be known. Since the air pressure at sea level for the current position is constantly changing due to the weather, it is usually acquired by the portable communication device from a local weather service via the Internet. However, if at a given time the portable communication device is not able to communicate with a weather service it cannot acquire the air pressure at sea level for the current position and the current altitude of the portable communication device cannot be determined with any precision. Even if the portable communication device would have old air pressure at sea level data stored it would not be wise to use it for determining the current altitude, since it would be very likely that the stored data would be outdated and not valid for the current location. Using no or outdated air pressure at sea level data will generate false estimates of the current altitude of the portable communication device, and which in worst case could deviate from the true altitude by several hundred meters. Thus, a way to achieve more reliable data on the current air pressure at sea level for the current location when the portable communication device is not capable of communicating with a weather service is highly sought for.

### SUMMARY OF THE INVENTION

With the above description in mind, then, an aspect of the present invention is to provide a way of determining the current altitude of a portable communication device at a specific location which seeks to mitigate, alleviate, or eliminate one or more of the above-identified deficiencies in the art and disadvantages singly or in any combination.

A first aspect of the present invention relates to a method for updating application information of an application in a portable communication device comprising, determining the current location of said portable communication device, determining the connectivity of said portable communication device to a communication network for said current location, adaptively creating a visitation history based on said current location, said connectivity, and on previously visited locations of said portable communication device and the connectivity of said previously visited locations, predicting a next location of said portable communication device based on said current location and said visitation history, determining, based on said visitation history, if said next location provides connectivity to a communication network, if said next location is determined to provide no connectivity to said communication network, then initiating downloading of information from a server on said communication network, and updating said application information in said portable communication device with said downloaded information.

The method may further comprises determining if said application has been executed in said portable communication device at said current location.

The method wherein the step of adaptively creating said visitation history may further be based on if said application has been executed in said portable communication device at said current location or at said previously visited locations.

The method may further comprises determining if said application have been executed at said next location determined to have no connectivity to a communication network, and if said application has been used at said next location determined to have no connectivity to a communication network, then updating said application information in said portable communication device with said downloaded information.

The method wherein said updating of said application information may further comprise, comparing said application information with said downloaded information and replacing said application information with said downloaded information if said application information is older than said downloaded information.

The method wherein the step of determining the current location may be performed by Enhanced Observed Time Difference of a network cell or by determining the position of said portable communication device using a global positioning system, or both.

The method wherein said application may be an altimeter application.

The method wherein said application information may be air pressure at sea level data.

The method wherein said server on said communication network may be a weather service server on the Internet.

A second aspect of the present invention relates to an apparatus for updating application information of an application in a portable communication device comprising, a first determining unit configured to determine the current location of said portable communication device, a second determining unit configured to determine the connectivity of said portable communication device to a communication network for said current location, a compiler configured to adaptively create a visitation history based on said current location, said connectivity, and on previously visited locations of said portable communication device and the connectivity of said previously visited locations, a prediction unit configured to predict a next location of said portable communication device based on said current location and said visitation history, a third determining unit configured to determine, based on said visitation history, if said next location provides connectivity to a communication network, a decision unit configured to initiate downloading, in a downloading unit configured to download information from a server on said communication network, if said next location is determined to provide no connectivity to said communication network and an updating unit adapted to update said application information in said portable communication device with said downloaded information.

The apparatus may further comprises a fourth determining unit configured to determine if said application has been executed in said portable communication device at said current location.

The apparatus wherein the compiler may further be configured to base the creation of said visitation history on if said application has been executed in said portable communication device at said current location or at said previously visited locations.

The apparatus may further comprise a fifth determining unit configured to determine if said application have been executed at said next location determined to have no connectivity to a communication network; and wherein the a decision unit is further configured to download information from said server on said communication network, if said next location is determined to provide no connectivity to said communication network and if said application is determined to have been used at said next location determined to have no connectivity to a communication network then an updating unit configured to update said application information in said portable communication device with said downloaded information.

The apparatus wherein said updating unit may further comprises a comparing unit configured to compare said application information with said downloaded information and a replacing unit configured to replace said application information with said downloaded information if said application information is older than said downloaded information.

The apparatus wherein the determining of the current location in the first determining unit may be performed by Enhanced Observed Time Difference of a network cell or by determining the position of said portable communication device using a global positioning system, or both.

Any of the features in the first and second aspect of the present invention above may be combined in any way possible to form different variants of the present invention.

### BRIEF DESCRIPTION OF THE DRAWINGS

Further objects, features, and advantages of the present invention will appear from the following detailed description of some embodiments of the invention, wherein some embodiments of the invention will be described in more detail with reference to the accompanying drawings, in which:
Fig. 1a shows an example of an altitude measuring system comprising of a mobile phone, a base station and a weather database for downloading air pressure at sea level data, according to an embodiment of the present invention; and
Fig. 1b shows a flowchart describing the basic steps of the tracking, downloading and updating process of an altimeter application, according to an embodiment of the present invention; and
Fig. 2a shows an example of a how a altimeter application in a mobile phone may take advantage of the present invention when travelling along a winding mountain road; and
Fig. 2b shows another example of a how a altimeter application in a mobile phone may take advantage of the present invention when travelling along a winding mountain road; and
Fig. 3 shows an external view of a portable communication device with an integrated pressure sensor, in this case a mobile phone with an integrated pressure sensor, according to an embodiment of the present invention; and
Fig. 4 shows a block diagram of the system for updating the application information in the mobile phone.

### DETAILED DESCRIPTION

Embodiments of the present invention relate, in general, to the field of portable communication devices and, in particularly, to mobile phones having a pressure sensor capable of recoding the ambient air pressure, and to the calibration of said pressure sensor.

Embodiments of the present invention will be described more fully hereinafter with reference to the accompanying drawings, in which embodiments of the invention are shown. This invention may, however, be embodied in many different forms and should not be construed as limited to the embodiments and variations set forth herein. Rather, these embodiments and variations are provided so that this disclosure will be thorough and complete, and will fully convey the scope of the invention to those skilled in the art. Like reference signs refer to like elements throughout.

At altitudes relatively close to sea level the air pressure varies uniformly with the altitude. In this way a barometer, i.e. a device for measuring the air pressure, can be used as an altimeter, i.e. a device for measuring the altitude. Thus, any device, such as a mobile phone, with an integrated pressure sensor (together with an altimeter software application) can be used for determining the height or altitude over sea level. However, to be able to determine the altitude, with a high accuracy, using the pressure sensor in the mobile phone, the current air pressure at sea level for the location where the altitude is going to be determined must be known. Unfortunately, the air pressure at sea level is not constant but fluctuates with time depending on several different factors such as the changes between low and high pressures, the reduction of air mass caused by upper level divergence (e.g. vorticity, jet streaks, etc.), the moisture advection (moist air is less dense than dry air), the warm air advection (warm air is less dense than cold air), etc. There are also a diurnal and a semidiurnal (12h) rhythm to the air pressure due to factors such as the warming of the upper atmosphere (mainly the thermosphere) by the Sun, the tropospheric heating, and hydrostatic variations in general. Trying to determine the current altitude without knowing the current air pressure at sea level at the time of measurement may result in a measurement error of the altitude up to several hundred meters. In some application this error in altitude is not acceptable and could in some cases be potential hazardous.

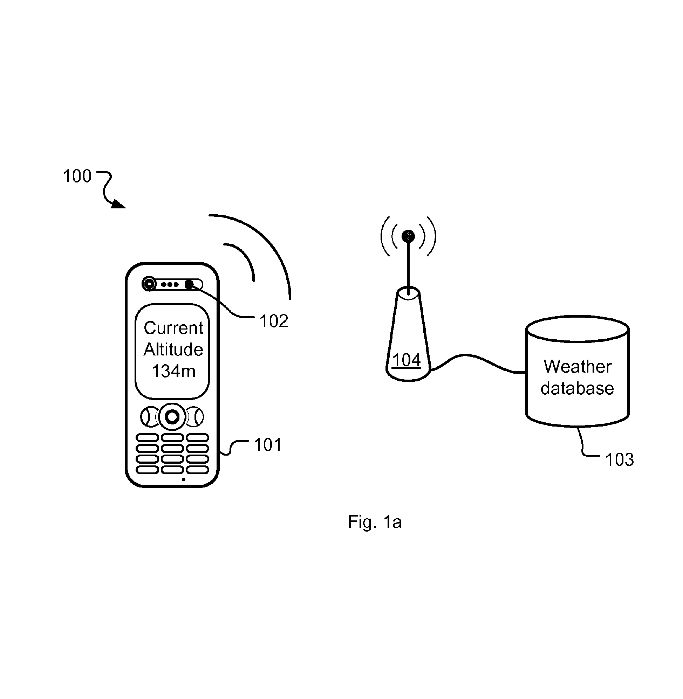

A way to determining the current air pressure at sea level is by retrieving it from a server having a weather database belonging to a weather service provider. The weather service provider owns or has access to several weather measurement stations and weather satellites around the globe, which continuously performs accurate measurements of the air pressure at different locations, and from these measurements, derive the current air pressure at sea level for the locations. An altimeter application running in a mobile phone may in this way connect to one or several weather service provider's servers using one or more of the mobile phones communication capabilities, and download the current air pressure at sea level for the current location of the mobile phone. Figure 1a shows an example of altitude measuring system 100 using a mobile phone with a pressure sensor. The altitude measuring system 100 is comprised of a mobile phone 101 with a built in pressure sensor 102 measuring the current ambient pressure impinging on the mobile phone 101. To be able to get an accurate determination of the current altitude the mobile phone 101 connects wirelessly using the mobile communication network to a server having a weather database 103, via a base station 104. The mobile phone or rather an application in the mobile phone then, for example, determines and transmits the approximate location of the mobile phone and a request for the current air pressure at sea level at its current location. The weather database 103 looks up the current air pressure at sea level for the given coordinates of the mobile phone 101 and transmits it, wirelessly via the base station 104, back to the mobile phone 101. The mobile phone 101 receives the current pressure at sea level for the location of the mobile phone 101, stores it in the mobile phone's memory, and may now be use by the altimeter application together with the pressure sensor 102 to determine the current altitude of the mobile phone 101.

To be able to service the mobile phone with the current air pressure at sea level for its location, the location of the mobile phone must be at least approximately known. The more precise the location of the mobile phone can be determined the better it is, since the weather service provider then can supply the altimeter application in the mobile phone with more accurate air pressure over sea level data. The current location of the mobile phone may be determined using some kind of mobile phone tracking method such as the Enhanced Observed Time Difference (E-OTD) method, Global Positioning System (GPS) positioning, communication network positioning, or some other land based or satellite based (or a combination of both land based and satellite based) positioning system. In a variant, the user of the mobile phone may himself provide his current approximate location, or an approximate location where he wants to know the current air pressure at sea level, by for instance indicating on a map, entering GPS coordinates (or some other well known coordinate system), or take a picture with the mobile phone of his surroundings, and let a database identify known landmarks in the picture and use the position of the known landmarks to establish his or hers approximate location.

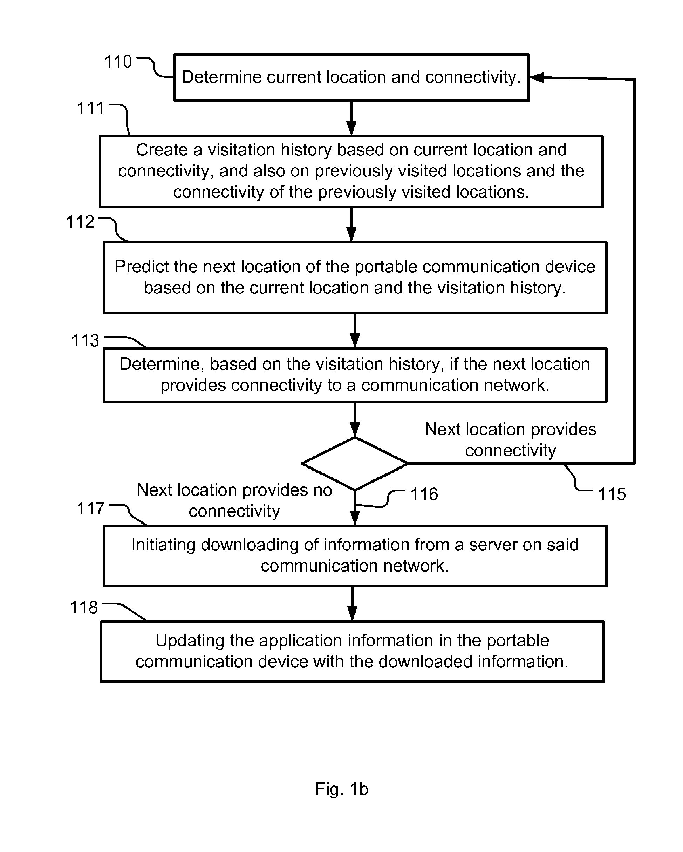

When connecting to a weather service provider the mobile phone could either, as in the example described in conjunction with figure 1, provide the weather service provider with its position, using one or more of the method mentioned above, or the weather service provider could try to determine the position of the mobile phone 101 based on for instance network information from the base station 104.

If the mobile phone enters into an area with no or only sporadic network connectivity, for instance when out hiking in the mountains, the current air pressure at sea level may not be available for download from a weather service provider, and thus an accurate altitude measurement can't be ensured. This could be potential hazardous especially if the user is relying on the altitude measurement of the mobile phone to track and navigate in the mountains and the last updated air pressure at sea level data is several days old and for a completely different location. One way of overcoming these difficulties is to use a location prediction engine together with a visitation history for planning the downloading of up-to-date air pressure at sea level data. The location prediction engine is capable of predicting, based on visitation history, when the mobile phone is likely to enter into an area without any connectivity to a weather service provider, and based on that prediction, the mobile phone (or rather an application in the mobile phone) may then take appropriate action to ensure that it has current air pressure at sea level data stored in the mobile phone for the current location and the location(s) with no connectivity, before losing connectivity. The location prediction engine works by creating and maintaining a visitation history of all locations visited by the mobile phone. The visitation history may be based on current and past information relating to visited network cells, recorded GPS positions, user inputted data, context awareness data, or any other passive or active tracking information. Information such as time, calendar information and information about the connectivity for each visited location may also be incorporated into the visitation history. In this way not only information about the mobile phone's frequently visited places, such as the user's home and work place, the route the user takes to work, the favourite stores and places of recreation, can be maintained, but also when and where connectivity to for instance weather service providers are pore or non-existing. The location prediction engine can, based on the visitation history and user behavioural information, recognise "visitation patterns" (such as a possible route between point A and point B) from the current behaviour of the user/users using the mobile phone, and thereby predict the next location of the mobile phone in the near future (e.g. the next location the mobile phone will arrive to). Details about how the location prediction engine works will not be discussed any further in here, but all the details can be obtained from the PCT application PCT/EP2010/057761.

A next location may either be predicted at given time instances or after a specific distance travelled set by the user or the manufacturer of the mobile phone or the manufacturer of the used (executed) application. Another way is to let the changes in the environment trigger a prediction of a next location for instance when the mobile phone changes network cell. Other possibility is to let the user himself trigger a prediction of a next location.

In an embodiment of the present invention the location prediction engine records the connectivity to weather service providers for different locations in the visitation history. In this way the local prediction engine will be able to provide the mobile phone with information regarding specific location's connectivity before arriving at that location. When the location prediction engine comes to the conclusion that the predicted next location will probably be a location without or with poor connectivity to a weather service provider, a download is triggered where the current air pressure at sea level data for the current and predicted next location in the area without connectivity, is downloaded and stored in the mobile phone for future use. If the mobile phone already contains stored air pressure at sea level data in the mobile phone for the current and/or the upcoming location in the area without connectivity, the stored air pressure at sea level data may be compared with the corresponding data at the weather service provider to see if there is more up-to-date air pressure at sea level data available or not. The downloading of current air pressure at sea level data for the current and upcoming location in the area without connectivity may in one variant only be initiated if there is a more up-to-date data at the weather service provider. In yet another variant the air pressure at sea level data is always downloaded from the weather service provider and the currently stored data, if any, is updated (replaced).

When the mobile phone enters the area without connectivity, and the user wants to make an altitude measurement, previously stored air pressure at sea level data for the locations within the area of no connectivity are used for calculating an accurate altitude for the current position of the mobile phone. In this way the error due to unknown current air pressure at sea level is kept to a minimum.

The present invention may not only target altimeter applications but can also be applied to other type of applications requiring updated application data. Figure 1b shows a flowchart describing a generalized method for updating application information, such as air pressure at sea level data, of an application, such as an altimeter application, executed in a mobile phone. The first step 110 is to determining the current location of the mobile phone and the connectivity of the mobile phone to a communication network, such as the Internet, for the current location. When the connectivity and the location have been determined for the mobile phone the visitation history 111 is updated with the current location and the connectivity of the current location. The visitation history 111 also based on the current location on previously visited locations and their connectivity to a communication network. In the next step 112 the next location of the mobile phone is predicted using the information in the visitation history and the current location, and after that it is also determined 113 if the next location of the mobile phone provides connectivity to a communication network 116 or not 115. If the next location provides connectivity to a communication network 115 the tracking application in the mobile phone keeps tracking and determining the (next) current position. However, if the next location does not provide connectivity 116 according to the visitation history, downloading of information, such as an updated air pressure at sea level data, is initiated from a server 117, such as a server on the Internet with a weather database (103), on the communication network. In the last step 118 the application information is updated with the downloaded information 117.

In a variation of the above described embodiment the location prediction engine records not only the connectivity for different locations in the visitation history but also which application(s) or function(s) in the mobile phone that has been used or activated at the different locations. The recorded information is then integrated into the visitation history. In this way when the location prediction engine predicts 112 that the next location is likely to not have any connectivity, the mobile phone or an application in the mobile phone, first determines by using the visitation history if any application or function have been (or usually is used) at the next location without connectivity. If it is determined that an application or function, for example the altimeter application, usually is used in the next location without connectivity, then the mobile phone or an application in the mobile phone initiate downloading 117 of information (for instance the current air pressure at sea level data) for the current and the next location in the area without connectivity, and the application in question is updated with the downloaded information 118. If it is found that no application is usually used or has been used in the next location without connectivity, then nothing is done and the mobile phone goes back to tracking and determining current location and connectivity 110. In this way unnecessary downloads are avoided and battery power in the mobile phone and/or cost (it may for instance cost money to download data from the weather service server) is saved.

In yet another variation of the above described embodiment the downloaded and stored application information, such as the air pressure at sea level data, is stored with a time stamp indicating the longest time the stored data should be used before it is to be considered outdated, obsolete and not safe to use. The time stamp may be determined by a preset time value which has been preset either by the user of the mobile phone, by the weather service provider or by the manufacturer of the pressure sensor, or by the manufacturer of the altimeter application. In the example with the altimeter application the preset time value may for instance be based on previous air pressure history of the specific area or location, current weather patterns, current time of day, time of year, current diurnal and a semidiurnal (12h) rhythm, or some other value coming from some pressure model. If stored application information, such as the air pressure at sea level data, with a time stamp that has been outdated is tried to be used in an (altimeter) application, a warning signal may be displayed in the mobile phone to alert the user. The user may then either chose to; use the outdated application information anyway, adjust the outdated application information and then use it, or block the application from starting using the old application information until new and updated data can be retrieved. In a variation the altimeter application is manufactured to not be usable with outdated application information for safety reasons.

In some cases the location prediction engine may have trouble establishing a location pattern of the user. This may for instance happen on weekends when the user tends to have a more ad hoc and random behaviour. When an ad hoc behaviour is detected by the location prediction engine, application information such as air pressure at sea level data for the surrounding area may be set to be downloaded by regular intervals so that if the mobile phone suddenly (without the location prediction engine capable of predicting it) enters into an area without connectivity to a weather service provider (server), the application such as the altimeter still will have freshly stored air pressure at sea level data for usage. How often, during ad hoc behaviour, the pressure data should be downloaded may be determined by a preset download time value which may be preset either by the user, by the weather service provider, the manufacturer of the pressure sensor or the manufacturer of the altimeter application, and may be based on previous pressure history for the specific area or location, current weather patterns, current time of day, time of year, current diurnal and a semidiurnal (12h) rhythm, or some other pressure model. When the location prediction engine detects a familiar location pattern it may return to its usual behaviour and thus stop downloading air pressure at sea level data on regular intervals, or it may continue to download pressure data on regular intervals for a specific amount of time, were the specific amount of time may be preset either by the user, by the weather service provider, the manufacturer of the pressure sensor or the altimeter application, just in case the location prediction engine detects an ad hoc behaviour again.

In a variation the outdated application information (i.e. the air pressure at sea level data) may be adjusted to be usable even though the mobile phone is in an area without connectivity to a weather service provider (i.e. server). If the mobile phone has a built-in GPS receiver the altimeter application may use GPS data to derive a safe estimate of the current altitude which may be used as a calibration point for the altimeter application using the pressure sensor for measuring the altitude. Modern GPS receivers calculate its position using a coordinate system known as Earth Centered Earth Fixed xyz (ECEF XYZ). The center of the earth is given the coordinates 0,0,0 where the x-axis extends from that center of earth to a point at the equator where the longitude is 0, the y-axis extends from the center of earth to a point at the equator where the longitude is 90 degrees east (in the + direction) and longitude 90 degrees west (in the - direction), and the z-axis extends to the north pole (+ direction) and to the south pole (- direction). Usually, the GPS manufacturers translate the ECEF XYZ coordinates to latitude, longitude, and elevation coordinates. The World Geodetic System has defined a standard for use in cartography, geodesy, and navigation based on the ECEF XYZ system with an ellipsoid reference surface since the earth is not completely spherical. Ideally, such an ellipsoid would correspond precisely to "sea level" everywhere in the world but this is not the case. The GPS manufacturers are compensating the errors in this model by providing a look-up table in the GPS module with compensation values for different positions on the surface of earth. The look-up table is usually fairly coarse for latitude and longitude, but the ellipsoid to mean sea level variation, known as geoidal separation, varies slowly when moving in latitude and/or in longitude. The GPS receiver usually calculates an ellipsoidal elevation and then applies an interpolated correction to that from the lookup table and the result is relayed to the application. However, the altitude data from a GPS may still be erroneous up to 100 meters (worst case) in altitude relative to the sea level in some places due to the imperfections in the calculation model described above. Using the altitude data from a GPS for calibrating the altimeter is therefore not a good idea and should only be used as a last resort or when the altitude error is known to be very small. The latitude and longitude data from a GPS is however much more exact (often within 1-10 meters) and could be used together with a map having topological data (preferably an integrated electronic map in the mobile phone) to pinpoint the current location and altitude of the mobile phone with a good degree of accuracy. The accurate altitude data read from the map could then be used to calibrate the altimeter application which then could use the ordinary air pressure measurement system to determine altitude.

In yet another variation the an outdated application information (i.e. air pressure at sea level data) can be adjusted to be usable even though the mobile phone is in an area without connectivity to a weather service provider (i.e. server). Mobile phones fitted with an inertial navigation system (INS) may use it for adjusting the outdated stored application information in roughly the same manner as described above regarding using GPS. INS is a navigation aid that uses motion sensors (accelerometers), tilt sensors, and/or rotation sensors (gyroscopes) to continuously calculate via dead reckoning the position, orientation, and velocity (direction and speed of movement) of the mobile phone without the need for external references. INS could be used together with a map with topological data to determine the current altitude and position of the mobile phone, and use it to calibrate the altimeter application which then could use the ordinary air pressure measurement system to determine altitude. The INS method may for instance be used when the battery power is low in the mobile phone and you do not want to turn on the power hungry GPS or when the GPS data have low precision (for instance when the GPS satellites are close to the horizon as they are if the user is located close to the poles).

In yet another variation of the embodiment described above a mobile phone fitted with a compass, a motion sensor and a map with topological data can, from a known position, be used to roughly calculate the mobile phones position on the map. The topological map data can then be used to determine the current altitude and position of the mobile phone, and use it to calibrate the altimeter application which then could use the ordinary air pressure measurement system to determine altitude.

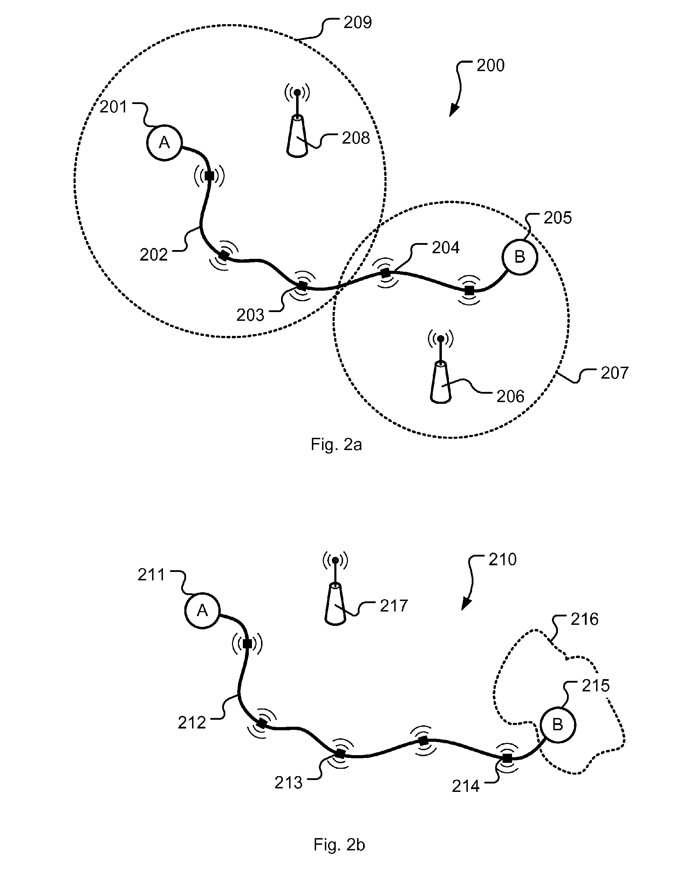

To better understand the present invention and its embodiments and variations, some use example will now be discussed. Figure 2a shows a first scenario 200 illustrating the present invention. A mobile phone in a car (indicated in the figure with a black square 203) is travelling from point A 210 to point B 205 on a winding mountain road 202. Along different parts of the mountain road 202 the mobile phone in the car communicate wirelessly (indicated by the parentheses around the black boxes 203) with a base station 208 in contact with a weather service provider, and requests new pressure at sea level data. The approximate coverage of each base station 208, 207 are shown by dotted circles 209, 207. When the car with the mobile phone 203 enters from a coverage region 209 covered by base station 208 into another coverage region 207 covered by base station 206, the mobile phone in the car 204 communicates with the new base station 206, which also is in contact with a weather service provider (could be the same as base station 208 was in contact with), and if necessary requests new pressure at sea level data from the new base station 206. Thus, the mobile phone always has up-to-date pressure at sea level data stored in the mobile phone along when driving along the mountain road 202, and can thereby use the altimeter application at any time and get an accurate altitude measurement.

Figure 2b shows a second scenario 210 illustrating the present invention. A mobile phone in a car (indicated in the figure with a black square 213) is travelling from point A 211 to point B 215 on a winding mountain road 212. Along different parts of the mountain road 212 the mobile phone in the car communicate wirelessly (indicated by the parentheses around the black boxes 213) with a base station 217 in contact with a weather service provider, and requests new air pressure at sea level data. In this second scenario 210 the base station 217 covers the entire mountain road except the last bit inside the dotted region 216. In the dotted region 216 there is no connectivity whatsoever with the base station 217 or a weather service provider. The mobile phone in the car has travelled between A 211 and B 215 many times and the location prediction engine knows, based on the visitation history stored in the mobile phone, that just before arriving at location B 215 the connectivity will go down. When the car with the mobile phone comes to the location on the mountain road 202 indicated by the car 214 the location prediction engine initiates a download request for new pressure at sea level data, not only for its current location at 214 but also for the future location at B 215. In this way an up-to-date pressure at sea level value is stored in the mobile phone for location B 215 in case the user wants to perform an altitude measurement with the mobile phone at that location.

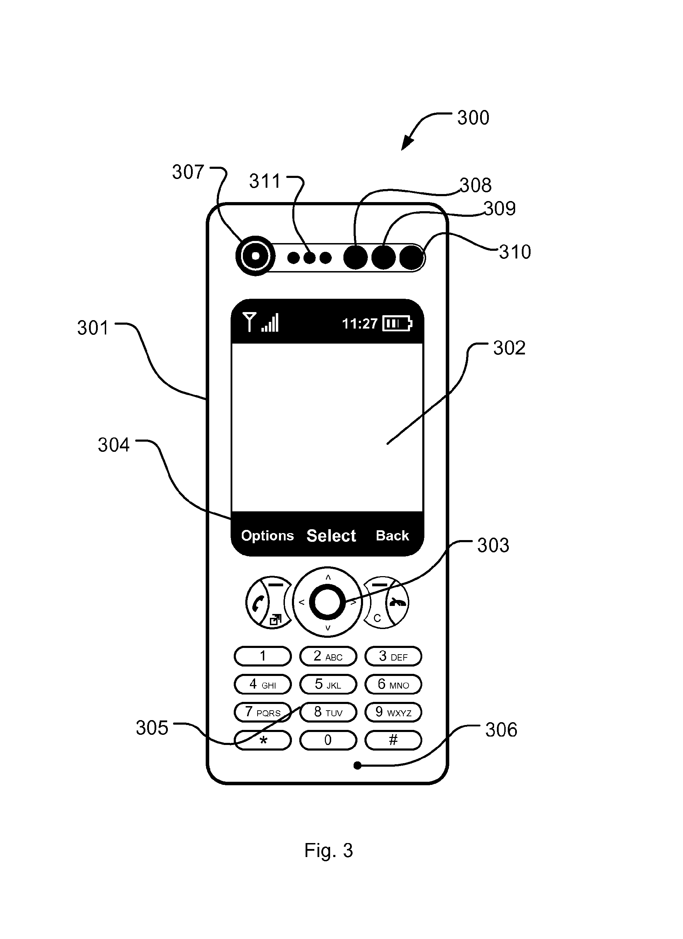

Figure 3 shows a mobile phone in where the present invention and all its variations can be embodied. The mobile phone 300 comprises of a casing 301, a display area 302, and means 303 for navigating among items displayed in the display area (not shown) and entering text and numbers 305 into the mobile phone. The display area may or may not be touch sensitive and it may comprise status indication areas and/or softkey bars 304. The display area 302, and the items displayed on it, may be operable using the navigation means 303 or, if using a touch sensitive screen, by tapping the on it with a pen-like object or a finger. The mobile phone 101 may also comprise other elements normally present in such devices, a speaker 311, a microphone 306, a camera 307, a photo sensor (e.g. ambient light) 309, a infrared light (IR) sensor infrared light emitting diode (IR LED) 310, a pressure sensor 308, processing means, memory means, one or more accelerometers, a vibration device, an AM/FM radio transmitter and receiver, a digital audio broadcast transmitter and receiver, a GPS device, an INS device, a Bluetooth device, a WiFi device, a near field communication device, an antenna module, an communication interface used for connecting external units extending the mobile phones capabilities.

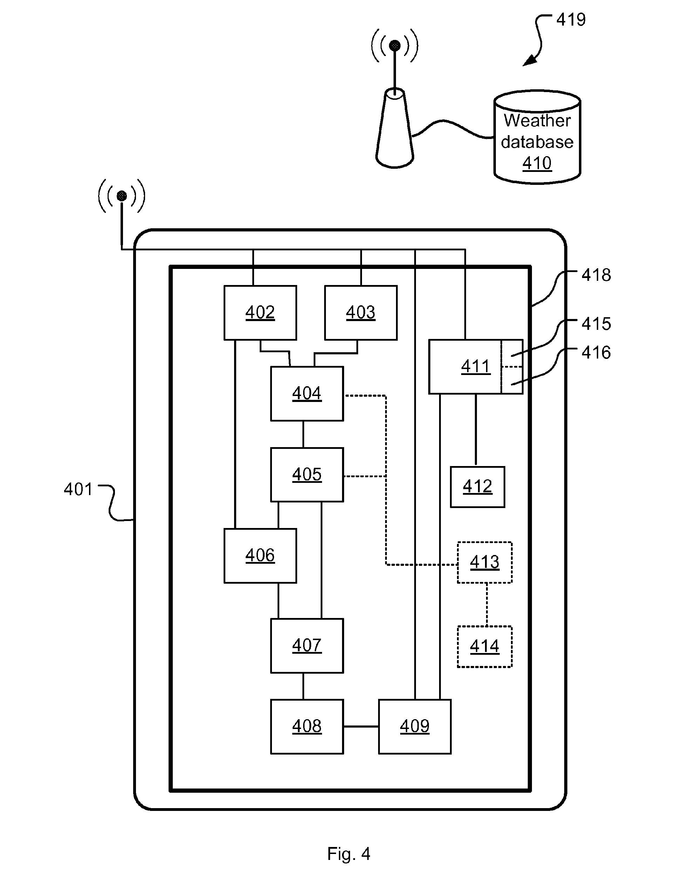

Figure 4 shows a block diagram of an apparatus 418 for updating application information 412 (i.e. air pressure at sea level) of an application (i.e. altimeter application) in a mobile phone 401. The apparatus is comprised of a first determining unit 402 for determine the current location of the mobile phone 401 and a second determining unit 403 for determine the connectivity to a communication network 419 for the current location of the mobile phone 401. A compiler 404 is configured to adaptively create a visitation history 405 stored in the apparatus 418. The visitation history may be based on the following parameters the current location, the current connectivity, on previously visited locations, and on the connectivity of the previously visited locations. A prediction unit 406 configured to predict the next location the mobile phone will arrive at, based on the determined current location 402 and the visitation history 405. A third determining unit 407 is configured to determine, based on the visitation history 405, if the predicted next location 406 is likely to provide connectivity to a communication network 419 or not. A decision unit 408 is then configured to initiate a downloading, in a downloading unit 409 configured to download information from a server 410 on the communication network 419, if the next location is determined to likely not provide any connectivity to the communication network 419. An updating unit 411 is then adapted to update the application information 412 in the mobile phone 401 with the downloaded information.

The apparatus 418 may in a variant also have a fourth determining unit 413 configured to determine if the application has been executed in the mobile phone 401 at the current location.

The compiler 404 in the apparatus 418 may further be configured to base the creation of the visitation history 405 on if the application has previously been executed in the mobile phone 401 at the current location or at the previously visited locations.

The apparatus 418 may in a variant further comprise a fifth determining unit 414 configured to determine if the application have been executed at the next location determined to have no connectivity to a communication network 419 and wherein the decision unit 408 is further configured to download information from the server 410 on the communication network 419, if the next location is determined to provide no connectivity to the communication network 419 and if the application is determined 414 to have been used, at the next location determined to have no connectivity to a communication network 419, then the updating unit 411 configured to update the application information 412 in the mobile phone401 with the downloaded information.

The updating unit 411 in the apparatus 418 may in a variant further comprises a comparing unit 415 configured to compare the application information 412 with the downloaded information and a replacing unit 416 configured to replace the application information 415 with the downloaded information if the application information 415 is older than the downloaded information.

The determining of the current location in the first determining unit 402 may in a variant be performed by either Enhanced Observed Time Difference of a network cell or by determining the position of the portable communication device using a global positioning system, or both.

The different variants of the apparatus described above may be combined in any possible way with each other and with the apparatus.

Embodiments of the present invention have been exemplified using a portable communication device such as a mobile phone. However, it should be appreciated that the invention is as such equally applicable to electronic devices which have wired- and/or wireless radio communication capabilities. Examples of such devices may for instance be any type of mobile phone, laptops (such as standard, ultra portables, netbooks, and micro laptops), handheld computers, PDAs, gaming devices, pads, accessories to mobile phones, etc. However, for the sake of clarity and simplicity, the embodiments outlined in this specification are exemplified with and related to mobile phones only.

The embodiments and the variations of the embodiment described above all have targeted a mobile phone with a pressure sensor running an altimeter application. However, the basic invention idée may be generalized and extended to many different applications and functions in a portable communication device, for example to a ambient light sensor and the downloading of UV indexes for different locations, etc.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. A method for updating application information of an application in a portable communication device comprising:
- determining the current location (110) of said portable communication device;
- determining the connectivity (110) of said portable communication device to a communication network for said current location (110);
- adaptively creating a visitation history (111) based on said current location (110), said connectivity (110), and on previously visited locations of said portable communication device and the connectivity of said previously visited locations;
- predicting a next location (112) of said portable communication device based on said current location (110) and said visitation history;
- determining, based on said visitation history, if said next location provides connectivity (113) to a communication network;
- if said next location is determined to provide no connectivity (116) to said communication network, then initiating downloading of information from a server (117) on said communication network; and
- updating said application information (118) in said portable communication device with said downloaded information.

2. The method according to claim 1, further comprises:
- determining if said application has been executed in said portable communication device at said current location (110).

3. The method according to claim 2, wherein the step of adaptively creating said visitation history (111) further is based on if said application has been executed in said portable communication device at said current location (110) or at said previously visited locations.

4. The method according to claim 3, further comprises:
- determining if said application have been executed at said next location determined to have no connectivity (116) to a communication network; and
- if said application has been used at said next location determined to have no connectivity (116) to a communication network, then
- updating said application information (118) in said portable communication device with said downloaded information.

5. The method according to claim 1 or 4, wherein said updating of said application information (118) comprises:
- comparing said application information with said downloaded information; and
- replacing said application information with said downloaded information if said application information is older than said downloaded information.

6. The method according to claim 1, wherein the step of determining the current location (110) is performed by Enhanced Observed Time Difference of a network cell or by determining the position of said portable communication device using a global positioning system, or both.

7. The method according to any of the claims above, wherein said application is an altimeter application.

8. The method according to any of the claims above, wherein said application information is air pressure at sea level data.

9. The method according to any of the claims above, wherein said server on said communication network is a weather service server on the Internet.

10. An apparatus for updating application information (412) of an application in a portable communication device (401) comprising:
- a first determining unit (402) configured to determine the current location of said portable communication device (401);
- a second determining unit (403) configured to determine the connectivity of said portable communication device (401) to a communication network for said current location;
- a compiler (404) configured to adaptively create a visitation history (405) based on said current location, said connectivity, and on previously visited locations of said portable communication device and the connectivity of said previously visited locations;
- a prediction unit (406) configured to predict a next location of said portable communication device (401) based on said current location and said visitation history (405);
- a third determining unit (407) configured to determine, based on said visitation history (405), if said next location provides connectivity to a communication network;
- a decision unit (408) configured to initiate downloading, in a downloading unit (409) configured to download information from a server (410) on said communication network, if said next location is determined to provide no connectivity to said communication network; and
- an updating unit (411) adapted to update said application information in said portable communication device (401) with said downloaded information.

11. The apparatus according to claim 10, further comprises:
- a fourth determining unit (413) configured to determine if said application has been executed in said portable communication device (401) at said current location.

12. The apparatus according to claim 11, wherein the compiler (404) is further configured to base the creation of said visitation history (405) on if said application has been executed in said portable communication device (401) at said current location or at said previously visited locations.

13. The apparatus according to claim 12, further comprises:
- a fifth determining unit (414) configured to determine if said application have been executed at said next location determined to have no connectivity to a communication network; and wherein the
- a decision unit (408) is further configured to download information from said server (410) on said communication network, if said next location is determined to provide no connectivity to said communication network and if said application is determined (414) to have been used at said next location determined to have no connectivity to a communication network; then
wherein said updating unit (411) is configured to update said application information in said portable communication device 401 with said downloaded information.

14. The apparatus according to claim 10 or 13, wherein said updating unit (411) further comprises:
- a comparing unit (415) configured to compare said application information with said downloaded information; and
- a replacing unit (416) configured to replace said application information with said downloaded information if said application information is older than said downloaded information.

15. The apparatus according to claim 10, wherein the determining of the
current location in the first determining unit (402) is performed by Enhanced Observed Time Difference of a network cell or by determining the position of said portable communication device using a global positioning system, or both.
